## Europäisches Patentamt
## European Patent Office
## Office européen des brevets

(19)

(11) Veröffentlichungsnummer : **0 069 269**
**B1**

(12) **EUROPÄISCHE PATENTSCHRIFT**

(45) Veröffentlichungstag der Patentschrift :
20.08.86

(21) Anmeldenummer : 82105418.6

(22) Anmeldetag : 21.06.82

(51) Int. Cl.⁴ : **A 01 N 25/02** // (A01N25/02,
57:24, 57:16, 53:00, 47:22)

(54) **Ektoparasitizide Sprüh-Formulierungen.**

(30) Priorität : 01.07.81 DE 3125897

(43) Veröffentlichungstag der Anmeldung :
12.01.83 Patentblatt 83/02

(45) Bekanntmachung des Hinweises auf die Patenterteilung : 20.08.86 Patentblatt 86/34

(84) Benannte Vertragsstaaten :
AT BE CH DE FR GB IT LI NL SE

(56) Entgegenhaltungen :
EP-A- 0 045 424
EP-A- 0 050 335
EP-A- 0 061 208
DE-A- 1 542 752
GB-A- 2 058 569
US-A- 4 096 262

(73) Patentinhaber : BAYER AG
Konzernverwaltung RP Patentabteilung
D-5090 Leverkusen 1 Bayerwerk (DE)

(72) Erfinder : Stendel, Wilhelm, Dr.
In den Birken 55
D-5600 Wuppertal 1 (DE)
Erfinder : Voege, Herbert, Dr.
Martin-Buber-Strasse 41
D-5090 Leverkusen 3 (DE)

**Beschreibung**

Die Erfindung betrifft die Verwendung ektoparasitizider Sprüh-Formulierungen von Wirkstoffen, die insbesondere gegen Zecken wirksam sind.

Es sind bereits Sprühbehandlungen von Tieren bekannt, die mit relativ großen Flüssigkeitsmengen, z. B. bei Tieren angewendet mit etwa 10 Liter/Tier, arbeiten und bei denen der Wirkstoff in Form von wässrigen Emulsionen oder Suspensionen mit Hilfe eines Sprühgerätes unter hohem Druck auf das Tier gebracht wird.

Diese Sprühbehandlungen erfordern somit einen hohen Aufwand an Wasser, Wirkstoff und Energien.

Es wurde nun ein Verfahren entwickelt, das eine praktisch 100 %ige Wirkung auf Ektoparasiten, insbesondere auf alle parasitierenden Zeckenstadien zeigt.

Aus EP-OS 45 424, DE-OS 1 542 752 und US-P 4 096 262 sind Formulierungen bekannt, mit deren Hilfe Ekto- und Endoparasitizide im pour-on-Verfahren ausgebracht werden können. Es geht nichts darüber hervor, daß diese Formulierungen auch versprüht werden können.

In GB-PS 2 058 569 sind Formulierungen auf Ölbasis mit Pyrethroiden zum Einsatz auf dem Gebiet des Pflanzenschutzes beschrieben. Mit diesen Formulierungen werden Pflanzen behandelt. Ein Hinweis auf die Eignung dieser Formulierungen für den Einsatz auf dem Gebiet der Tierzucht wurde nicht erwähnt.

Die Erfindung betrifft demgemäß ein Verfahren zur Bekämpfung von Ektoparasiten an Tieren, dadurch gekennzeichnet, daß man Formulierungen mit einem Gehalt von mindestens 0,0001 Gewichtsprozent des Wirkstoffes, 10 bis 80 Gewichtsprozent eines oder mehrerer spreitender Öle, 20 bis 95 Gewichtsprozent eines oder mehrerer hautverträglicher Lösungsmittel und 0 bis 20 Gewichtsprozent weiterer Hilfsstoffe in Tropfengrößen kleiner 50 µm, vorzugsweise kleiner 5 µm versprüht.

Die Erfindung betrifft ferner Formulierungen zur Anwendung in dem obengenannten Verfahren. Bevorzugt werden die erfindungsgemäßen Sprüh-Formulierungen in Volumina von 5 bis 300 ml, insbesondere 10 bis 70 ml pro Tier eingesetzt.

Die erfindungsgemäßen Formulierungen zeichnen sich dadurch aus, daß der Wirkstoff in einem geeigneten hautverträglichen Lösungsmittel bzw. Lösungsmittelgemisch gegebenenfalls unter Zugabe weiterer Hilfsstoffe gelöst, emulgiert bzw. suspendiert wird und mit Hilfe einer geeigneten Vorrichtung (Sprühbogen, Sprühflasche, Sprühdose) auf die Haut des zu behandelnden Tieres gebracht wird.

Eine Zeckenbekämpfung nach dem erfindungsgemäßen Verfahren mit den neuartigen Formulierungen hat gegenüber den herkömmlichen Methoden folgende Vorteile :

1. teures Installieren einer Tauch- oder Sprayanlage entfällt

2. es bestehen keine Probleme mit der Wasserversorgung der Dips und Sprays und der Energieversorgung der Sprayanlagen

3. der Bedarf an Wirkstoff ist wesentlich geringer

4. das Herantreiben der Tiere über große Entfernungen entfällt ; dadurch wird der Gewichtsverlust bei diesen Tieren vermieden

5. keine Schwierigkeiten mit dem Einhalten der optimalen Wirkstoffkonzentration in den Bädern (beim Baden der Tiere entziehen diese der Badeflüssigkeit überproportional Wirkstoff = Stripping) ; dadurch muß in bestimmten Abständen zusätzlich Wirkstoffkonzentrat dem Bad zugefügt werden, damit der Wirkstoffgehalt im Bad nicht unter die noch wirksame Dosis sinkt.

Je nach Spezies und Entwicklungsstadium bevorzugen Ektoparasiten, insbesondere Zecken, unterschiedliche Körperteile bei den Wirtstieren, wobei meist haararme Körperteile (Ohr, Dammgegend, Euterspiegel, Schwanzwurzel, Unterbauchpartie) bevorzugt werden. Um die erfindungsgemäßen Formulierungen aber auf dem Tier völlig zu verteilen, genügt es daher nicht, nur den Wirkstoff in irgendeiner Lösung auf das Tier zu bringen. Sofern man die aufzutragende Wirkstoffmenge in akzeptabler Volumenlösung verabreicht, ist der Zusatz spezifischer Substanzen nötig. Ein möglichst kleines Volumen ist aus den angeführten Gründen hier optimal.

Überraschenderweise bewirkt das Sprühen extrem kleiner Volumina der erfindungsgemäßen Formulierungen eine so gute Verteilung des wirksamen Stoffes auf der Tierhaut, daß gegenüber der herkömmlichen Sprüh-Applikation bei Anwendung der erfindungsgemäßen Formulierungen nur noch ca. 1/20 des bisherigen Volumens und ca. 1/20 der bisherigen Wirkstoffmenge zum Bekämpfungserfolg genügt.

Unter spreitenden Ölen werden solche öligen Flüssigkeiten verstanden, die sich auf der Haut besonders gut verteilen. Sie sind als solche in der Kosmetik bekannt. Nach einem Vorschlag von R. Keymer, Pharm. Ind. *32*, 577 (1970) können sie z. B. durch ihre Oberflächenspannung gegen Luft charakterisiert werden, die danach weniger als 30 dyn/cm betragen sollte. Diese Spreitung kann auch nach dem sogenannten Abklatschtest auf der menschlichen Haut experimentell bestimmt werden (z. B. bei R. Keymer, Pharm. Ind. *32*, 577 (1970), oder F. Neuwald, K. E. Fetting und A. Szakall, Fette-Seifen-Anstrichmittel *64*, 465 (1962).

Es ist überraschend und bisher nicht bekannt, daß solch geringe Volumina einer solchen Formulierung sich über eine so große Oberfläche verteilen können, wie sie etwa ein Rind besitzt. Dies wird aus den unten aufgeführten Beispielen ersichtlich.

Als für die Herstellung der erfindungsgemäßen Sprüh-Formulierungen einsetzbare Wirkstoffe kommen vor allem in Betracht:

Synthetische Pyrethroide, organische Phosphorverbindungen, Carbamate, Amidine oder Thioharnstoffe, insbesondere jedoch

Flumethrin (= 3'-Phenoxy-4'-fluor-α-cyanbenzyl-2,2-dimethyl-3-(2"-p-chlorphenyl-2"-chlorvinyl)-cyclopropan-carboxylat)

O-Äthyl-O-(8-chinolyl)-phenyl-thionophosphonsäureester

Coumafos (= O,O-Diaethyl-O-(3-chlor-4-methyl-7-cumarinyl)-thiophosphat)

Propoxur (= 2-Isopropoxyphenyl-N-Methylcarbamat).

Als spreitende Öle kommen in Betracht:

Silikonöle verschiedener Viskosität:

Fettsäureester wie Aethylstearat, Di-n-butyl-adipat, Laurinsäure-hexylester, Dipropylen-glykolpelargonat, Ester einer verzweigten Fettsäure mittlerer Kettenlänge mit gesättigten $C_{16}$-$C_{18}$-Fettalkoholen, Isopropylmyristat, Isopropylpalmitat, Capryl/Caprinsäureester von gesättigten Fettalkoholen der Kettenlänge $C_{12}$-$C_{18}$. Isopropylstearat, Ölsäureoleylester, Ölsäuredecylester, Aethyloleat, Milchsäureethylester, wachsartige Fettsäureester wie künstliches Entenbürzeldrüsenfett, Dibutylphthalat, Adipinsäzrediisopropylester, letzterem verwandte Estergemische u. a.

Triglyceride wie Capryl/Caprinsäuretriglycerid, Triglyceridgemische mit Pflanzenfettsäuren der Kettenlänge $C_8$-$C_{12}$ oder anderen speziell ausgewählten natürlichen Fettsäuren, Partialglyceridgemische gesättigter oder ungesättigter evtl. auch hydroxylgruppenhaltige Fettsäuren und Monodiglyceride der $C_8$-$C_{10}$-Fettsäuren.

Fettalkohole wie Isotridecylalkohol, 2-Octyldodecanol, Cetylstearylalkohol, Oleylalkohol.

Fettsäuren wie z. B. Ölsäure.

Besonders gut geeignete spreitende Öle sind die folgenden:

Isopropylmyristat, Isopropylpalmitat, Capryl/Caprinsäure-ester von gesättigten Fettalkoholen der Kettenlänge $C_{12}$-$C_{18}$, wachsartige Fettsäureester wie künstliches Entenbürzeldrüsenfett und Silikonöle.

Als für die Herstellung der erfindungsgemäßen Sprüh-Formulierungen geeignete Lösungsmittel kommen im Prinzip alle organischen und anorganischen Lösungsmittel in Frage, die den beispielsweise zeckenwirksamen Stoff in ausreichender Konzentration aufnehmen und das Gewebe nicht schädigen.

Als gut geeignete Lösungsmittel kommen für die Herstellung der erfindungsgemäßen Sprüh-Formulierungen in Betracht:

Alkanole wie Äthylalkohol, Isopropylalkohole, n-Butyl-alkohol, Amylalkohol, Octanol.

Glykole wie Propylenglykol, 1,3-Butylenglykol, Äthylglykol, Dipropylenglykolmonomethyläther.

Aromatische Alkohole wie Benzylalkohol.

Carbonsäureester wie z. B. Äthylacetat, Benzylbenzoat, Butylacetat, Propylencarbonat, Milchsäureethylester.

Aromatische und/oder aliphatische Kohlenwasserstoffe.

Öle, die nicht unter die Definition der spreitenden Öle fallen wie z. B. Baumwollsaatöl, Erdnuöl, Maiskernöl, Olivenöl, Ricinusöl, Sesamöl.

Wasser.

Ketone wie z. B. Aceton und Methyläthylketon.

Weiterhin sind u. a. Verbindungen wie Dimethylsulfoxid, Dimethylacetamid, Dimethylformamid, N-Methylpyrrolidon, Dioxan, 2-Dimethyl-4-oxymethyl-1,3-dioxalan gut als Lösungsmittel geeignet.

Besonders geeignet sind niedere Alkohole mit bis zu 8 Kohlenstoffatomen im Molekül, sowie niedere Ketone wie Methyläthylketon und Äther des Aethylenglykols.

Es können bei der Herstellung der erfindungsgemäßen Sprüh-Formulierungen ein oder mehrere Lösungsmittel eingesetzt werden.

Als weitere Hilfsstoffe sind geeignet:

a) Haftvermittler, z. B. Carboxymethylcellulose, Methylcellulose und andere Cellulose- und Stärkederivate, Polyacrylate, Alginate, Gelatine, Gummi-arabicum, Polyvinylpyrrolidon, Polyvinylalkohol, Copolymere aus Methylvinyläther und Maleinsäureanhydrid, Polyäthylenglykole, Paraffine, Öle, Wachse, hydriertes Ricinusöl.

Kolloidale Kieselsäure oder Gemische der aufgeführten Stoffe. Lösungen und Emulsionen können neben dem Wirkstoff die üblichen Trägerstoffe enthalten, wie

b) Tenside (beinhaltet Emulgatoren und Netzmittel), z. B.

1. anionaktive, wie Na-Laurylsulfat, Fettalkoholäther-sulfate, Mono/Dialkylpolyglykolätherorthophosphorsäureester-Monoäthanolaminsalz,

2. kationaktive, wie Cetyltrimethylammoniumchlorid,

3. ampholytische, wie Di-Na-N-lauryl-ß-iminodipropionat oder Lecithin,

4. nicht ionogene, z. B. polyoxäthyliertes Ricinusöl, polyoxäthylierte Sorbitan-Monooleat, Sorbitan-Monostearat, Äthylalkohol, Glycerinmonostearat, Polyoxäthylenstearat, Alkylphenolpolyglykoläther.

c) Stabilisatoren zur Verhinderung des bei einigen Wirkstoffen eintretenden chemischen Abbaus, wie z. B. Antioxydantien, beispielsweise Tocopherole, Butylhydroxyanisol.

Die erfindungsgemäßen Sprüh-Formulierungen besitzen folgende Zusammensetzung :

a) Wirkstoff : mindestens 0,000 1 Gewichtsprozent, vorzugsweise 0,5 bis 10 Gewichtsprozent ;

b) Spreitendes Öl : 10 bis 80 Gewichtsprozent, vorzugsweise 20 bis 70 Gewichtsprozent ;

c) Lösungsmittel : 20 bis 95 Gewichtsprozent, vorzugsweise 60 bis 90 Gewichtsprozent ;

d) Weitere Hilfsstoffe : 0 bis 20 Gewichtsprozent, vorzgsweise 0 bis 10 Gewichtsprozent.

Bevorzugte spreitende Öle sind :
Isopropylmyristat, Isopropylpalmitat, Capryl/Caprinsäuretriglycerid, gesättigte Triglyceride natürlicher Fettsäuren, Fettsäureester, die künstlichem Entenbürzel-drüsenfett entsprechen oder Silikonöle : 10 bis 80 Gewichtsprozent, vorzugsweise 20 bis 70 Gewichtsprozent.
Bevorzugte Lösungsmittel sind :
Isopropanol, Amylalkohol, Methyläthylketon, Glykoläther, Butylacetat, Milchsäureaethylester : 20 bis 95 Gewichtsprozent, vorzugsweise 60 bis 90 Gewichtsprozent.
Die erfindungsgemäßen Formulierungen werden hergestellt, indem man den ektoparasitizid, insbesondere zeckenwirksamen Stoff in einem geeigneten hautverträglichen Lösungsmittel bzw. Lösungsmittelgemisch löst, emulgiert bzw. suspendiert, spreitende Öle hinzufügt und gegebenenfalls die weiteren Hilfsstoffe zusetzt.
Die obige Reihenfolge der Verfahrensschritte ist nicht kritisch, sie kann geändert oder die Bestandteile der erfindungsgemäßen Formulierungen können auch gegebenenfalls gleichzeitig unter ständigem Rühren zusammengegeben werden. Bei der Herstellung werden die einzelnen Bestandteile in den vorne angegebenen Mengenverhältnissen zugesetzt.
Die im folgenden aufgeführten erfindungsgemäßen Formulierungen wurden wie oben angegeben hergestellt und vergleichend mit Formulierungen, welche keine spreitenden Öle enthielten, im Hinblick auf die Wirksamkeit getestet.
Die überlegene Wirkung der erfindungsgemäßen Formulierungen geht aus folgendem Beispiel hervor :

Beispiel 1

In-vivo-Zeckentest an Boophilus microplus

Zusammensetzung

| | |
|---|---|
| Flumethrin 100 %ig | 5,0 |
| Isopropylmyristat | 30,0 |
| 2-Octyldodecanol | 20,0 |
| Isopropanol | 28,75 |
| | 83,75 g = 100 ml |

5 Teile Flumethrin werden in 95 Teilen eines Gemisches aus Lösungsmitteln und Spreitmittel gelöst und mit Isopropanol auf die gewünschte Anwendungskonzentration verdünnt. Mit je 50 ml der so erhaltenen Wirkstoffzubereitung werden Rinder besprüht, die mit resistenten Zeckenlarven der Art Boophilus microplus, Biarra-Stamm (mehrfache Infektion, 12 x im Abstand von 2 Tagen) infiziert sind.
Die Wirkung der Wirkstoffzubereitung wird bestimmt durch Ermittlung der Zahl der auf den behandelten Rindern zur Entwicklung kommenden adulten weiblichen Zecken. Diese Zahl wird verglichen mit der Zahl von adulten weiblichen Zecken, die auf unbehandelten Rindern zur Entwicklung kommen. Eine Verbindung ist umso wirksamer, je weniger weibliche Zecken nach der Behandlung zur Entwicklung kommen. Als Maß der Stärke des Befalls vor der Behandlung wird die Zahl der adulten Weibchen benutzt, die bei behandelten und unbehandelten Tieren in den letzten 3 Tagen vor dem Behandlungszeitpunkt zur Entwicklung kommen.

(Siehe Tabelle Seite 5 f.)

Tabelle

Boophilus microplus (res. Biarra-Stamm) / Alle Entwicklungsstadien Zahl der Zecken mit fertilen Gelegen

| Appl.-Art | Appl.-Volumen Liter | Wirkst.-Konz. in % a.i. | entspr. Wirkst.-menge in mg/ Tier | Zahl der Zecken mit fertilen Gelegen | | | | | | | | |
|---|---|---|---|---|---|---|---|---|---|---|---|---|
| | | | | Tage v. Behand-lung | Tage nach Behandlung | | | | | | | |
| | | | | | +1-3 | 4-6 | 7-9 | 10-12 | 13-15 | 16-18 | 19-21 | +1-21 Σ |
| her-kömm-lich Hand-spray | 10 | 0,001 | 100 | 1681 | 0 | 0 | 0 | 0 | 0 | 0 | 0 | 0 |
| | 10 | 0,0003 | 30 | 1822 | 0 | 0 | 1 | 3 | 1 | 0 | 3 | 8 |
| | 10 | 0,0001 | 10 | 1860 | 2 | 25 | 75 | 10 | 2 | 0 | 0 | 110 |
| | 10 | 0,00003 | 3 | 2433 | 19 | 593 | 325 | 113 | 82 | 26 | 68 | 1326 |
| er-fin-dungs-gemäß nach Beisp. 1 | 0,05 | 0,01 | 5 | 1095 | 0 | 0 | 0 | 0 | 0 | 0 | 0 | 0 |
| unbehandelte Kontrolle | | | — | 1994 | 642 | 1354 | 1848 | 585 | 669 | 542 | 398 | 6088 |

Zeitpunkt der Behandlung

0 069 269

## Patentansprüche

1. Verfahren zur Bekämpfung von Ektoparasiten an Tieren, dadurch gekennzeichnet, daß man Formulierungen mit einem Gehalt von mindestens 0,000 1 Gewichtsprozent eines ektoparasitiziden Wirkstoffes, 10 bis 80 Gewichtsprozent eines oder mehrerer spreitender Öle, 20 bis 95 Gewichtsprozent eines oder mehrerer hautverträglicher Lösungsmittel und 0 bis 20 Gewichtsprozent weiterer Hilfsstoffe in Tropfengrößen kleiner 50 μm versprüht.

2. Verfahren gemäß Anspruch 1, dadurch gekennzeichnet, daß die Volumina der Einzeldosis 5 bis 300 ml pro Tier betragen.

3. Verfahren gemäß Anspruch 2, dadurch gekennzeichnet, daß die Volumina der Einzeldosis 10 bis 70 ml pro Tier betragen.

4. Verfahren gemäß Ansprüchen 2 und 3, dadurch gekennzeichnet, daß die Dosierungsseinheiten 1, 2, 3 oder 4 Einzeldosen oder 1/2, 1/3 oder 1/4 einer Einzeldosis enthalten.

5. Ektoparasitizide Sprüh-Formulierung zur Anwendung im Verfahren gemäß Anspruch 1.

6. Ektoparasitizide Sprüh-Formulierung nach Anspruch 5, dadurch gekennzeichnet, daß sie eine gegen Zecken wirksame Verbindung enthält.

7. Ektoparasitizide Sprüh-Formulierung nach Anspruch 5, dadurch gekennzeichnet, daß sie 3'-Phenoxy-4'-fluor-α-cyanbenzyl-2,2-dimethyl-3-(2''-p-chlorphenyl-2''-chlorvinyl)-cyclopropan-carboxylat enthält.

8. Ektoparasitizide Sprüh-Formulierung nach Anspruch 5, dadurch gekennzeichnet, daß sie 0-Äthyl-0-(8-chinolyl)-phenyl-thionophosphonsäureester enthält.

9. Ektoparasitizide Sprüh-Formulierung nach Anspruch 5, dadurch gekennzeichnet, daß sie 0,0-Diethyl-0-(3-chlor-4-methyl-7-cumarinyl)-thiophosphat enthält.

10. Ektoparasitizide Sprüh-Formulierung nach Anspruch 5, dadurch gekennzeichnet, daß sie 2-Isopropoxyphenyl-N-methylcarbamat enthält.

## Claims

1. Method of combating ectoparasites on animals, characterised in that formulations having a content of at least 0.000 1 per cent by weight of an ectoparasiticidal active coumpound, 10 to 80 per cent by weight of one or more spreading oils, 20 to 95 per cent by weight of one or more skin-tolerated solvents and 0 to 20 per cent by weight of other auxiliaries are sprayed on in drop sizes of less than 50 μm.

2. Method according to Claim 1, characterised in that the volumes of the individual dose are 5 to 300 ml per animal.

3. Method according to Claim 2, characterised in that the volumes of the individual dose are 10 to 70 ml per animal.

4. Method according to Claims 2 and 3, characterised in that the dosage units contain 1, 2, 3 or 4 individual doses or 1/2, 1/3 or 1/4 of an individual dose.

5. Ectoparasiticidal spray formulation for use in the method according to Claim 1.

6. Ectoparasiticidal spray formulation according to Claim 5, characterised in that it contains a compound which is active against ticks.

7. Ectoparasiticidal spray formulation according to Claim 5, characterised in that it contains 3'-phenoxy-4'-fluoro-α-cyanobenzyl-2,2-dimethyl-3-(2''-p-chlorophenyl-2''-chlorovinyl)-cyclopropanecarboxylate.

8. Ectoparasiticidal spray formulation according to Claim 5, characterised in that it contains 0-ethyl-0-(quinol-8-yl)-phenyl-thionophosphonic acid ester.

9. Ectoparasiticidal spray formulation according to Claim 5, characterised in that it contains 0,0-diethyl-0-(3-chloro-4-methyl-coumarin-7-yl)-thiophosphate.

10. Ectoparasiticidal spray formulation according to Claim 5, characterised in that it contains 2-isopropoxyphenyl-N-methyl-carbamate.

## Revendications

1. Procédé pour la lutte contre les ectoparasites chez les animaux, caractérisé en ce que l'on pulvérise en gouttes de moins de 50 μm des formulations ayant une teneur d'au moins 0,000 1 % en poids d'une substance active ectoparasiticide, 10 à 80 % en poids d'une ou plusieurs huiles d'étalement, 20 à 95 % en poids d'un ou plusieurs solvants compatibles avec la peau et 0 à 20 % en poids d'autres substances auxiliaires.

2. Procédé selon la revendication 1, caractérisé en ce que les volumes de la dose individuelle sont de 5 à 300 ml par animal.

3. Procédé selon la revendication 1, caractérisé en ce que les volumes de la dose individuelle sont de 10 à 70 ml par animal.

4. Procédé selon les revendications 2 et 3, caractérisé en ce que les unités de dosage contiennent 1, 2, 3 ou 4 doses individuelles ou 1/2, 1/3 ou 1/4 de dose individuelle.

5. Formulation ectoparasiticide à pulvériser pour l'application dans le procédé selon la revendication 1.

6. Formulation ectoparasiticide à pulvériser selon la revendication 5, caractérisée en ce qu'elle contient un composé actif contre les tiques.

7. Formulation ectoparasiticide à pulvériser selon la revendication 5, caractérisée en ce qu'elle contient du 2,2-diméthyl-3-(2″-p-chlorophényl-2″-chlorovinyl)-cyclopropane-carboxylate de 3′-phénoxy-4′-fluoro-α-cyanobenzyle.

8. Formulation ectoparasiticide à pulvériser selon la revendication 5, caractérisée en ce qu'elle contient du phénylthionophosphonate de 0-éthyle et de 0-(8-quinoléyle).

9. Formulation ectoparasiticide à pulvériser selon la revendication 5, caractérisée en ce qu'elle contient du thiophosphate de 0,0-diéthyle et de 0-(3-chloro-4-méthyl-7-coumarinyle).

10. Formulation ectoparasiticide à pulvériser selon la revendication 5, caractérisée en ce qu'elle contient du N-méthyl-carbamate de 2-isopropoxyphényle.